# EUROPEAN PATENT APPLICATION

(11) **EP 4 253 771 A1**
(43) Date of publication of application: **04.10.2023**
(21) Application number: 22165638.2
(22) Date of filing: 30.03.2022
(51) Int. Cl.: F16B 19/14, B21J 15/02

(54) **FASTENING ELEMENT AND METHOD FOR JOINING AT LEAST TWO COMPONENTS WITHOUT A PRE-FORMED HOLE**

(71) Applicant: Newfrey LLC, New Britain, CT 06053 (US)
(72) Inventor: SARTISSON, Vadim, 35394 Giessen (DE); SCHMITT, Andreas, 35394 Giessen (DE); WISSLING, Matthias, 35394 Giessen (DE); REIS, Christian, 35394 Giessen (DE); DOSTAL, Dominik, 35394 Giessen (DE); DEMIRCIOGLU, Orhan, 35394 Giessen (DE); MATHIA, Steffen, 35394 Giessen (DE)
(74) Representative: SBD IPAdmin

(57) **Abstract**

Fastening element (10) for joining at least two components without preformed hole(s) and particularly adapted when at least one of the components is made in a high-strength material, with a setting tool (32) having a punch (34), wherein the fastening element is driven in the components by the punch (34) comprising:
- a head (16) at a first axial end
- a tapered hole-forming portion (20) at a second axial end opposite to the first axial end, and
- a shaft (24) arranged between the tapered hole-forming portion (20) and the head (16) and defining a longitudinal axis (X) of the fastening element between the first and the second axial end (18, 22), wherein the surface of the shaft cross-section is less than or equal 7.1 square millimetres.

## Description

The present invention relates to a fastening element for joining at least two components without preformed hole(s), and notably for joining high-strength materials. The present invention is also directed to a method for joining at least two components without a pre-formed hole with a setting tool having a punch and a fastening element.

It is known from the state of the art to join two components made from a conventional material, for example conventional steel of customary strength, without pre-formed hole, for example by clinching, punch riveting, self-piercing riveting flow drill or direct screwing. Joining methods for components without pre-formed holes are however mostly limited to components of conventional strength, since the maximum forces for such joining devices are reduced and they are not able to pierce or penetrate any kind of material or the strength of the joining elements may not be sufficient and/or are limited to processes allowing a two-sided access.

Recently, in particular in the automotive industry, the use of high-strength material has been gradually increased as economy in automotive fuel and battery consumption as well as passenger safety during automobile collisions are increasingly required.

Manufacturing methods and processes have been further developed to address this problem. For instance, DE102016118109A1 from the applicant discloses a method for or joining at least one component to a second component without pre-formed (for example pre-drilled or pre-punched) hole or holes in the components prior to the joining. The method disclosed in DE102016118109A1 uses for instance an electric arc. The region of the joining area is heat-treated via an electric arc, which is formed between the first component on the one hand and an electrode provided on the joining device on the other hand, in such a way that a heat-affected zone is formed on a joining area of the first component. More particularly, the first component is heated in such a way that a strength of the first component in the heat-affected zone is reduced. Such method is satisfactory, but the need exists to improve the fasteners to be used with said method.

Fastener (fastening element or joining elements) for establishing a connection between two components usually comprise a head, a shaft as well as an end portion. The specific construction of the joining element depends on the desired field of application, so that joining elements are known in the prior art in a plurality of different designs.

With the known joining elements, components made of a material with a tensile strength of 600-800 MPa (eventually 1000 MPa) can currently be reliably joined. Starting from this strength class, a one-sided process is not possible and/or the separation of a slug and/or failure of the joining element occurs. Thus, the known joining elements fail when translatorily set in a component made of high-strength or ultra-high-strength material that has not been pre-punched in the joining portion, wherein the tip of the element should penetrate the component completely.

In order to overcome those drawbacks, US2021239146A1 for instance discloses a fastener wherein at least the shaft and the end portion of the joining element comprise a hardened edge layer, so that a material of the shaft and the end portion has in the interior a lower hardness compared to an adjacent surface of the edge layer. EP3234381A1 is directed to a fastening element with a tapered region and a shaft region, wherein the tapered region is comprised of a first material having a first hardness and the shaft region is comprised of a second material having a second hardness and wherein the first hardness is greater than the second hardness. These fastening elements are complicated to manufacture and have a size which requires high joining forces or a deformation of the fastening element.

Therefore, a need still exists to provide a reliable fastening element for joining high-strength material (for instance components made of a high- or ultra-high-strength material with a tensile strength in the range of more than 600-800 MPa) which can be used without failure of the fastening element, with relatively low (or lower) joining forces and for instance, with a single-sided joining method with low joining forces for industrial robots or with the method disclosed in DE102016118109A1.

Accordingly, the present invention provides a fastening element according to claim 1. More particularly, the fastening element is for joining at least two components without preformed hole(s) and particularly adapted when at least one of the components is made in a high-strength material. A setting tool having a punch is used to drive the fastening element. The fastening element comprises a head at a first axial end, a tapered hole-forming portion at a second axial end opposite to the first axial end, and a shaft arranged between the tapered hole-forming portion and the head and defining a longitudinal axis of the fastening element between the first and the second axial end, wherein the surface of the shaft cross-section is less than or equal 7.1 square millimetres (7,1e-5 square meters).

Such fastening element is particularly small with regard to existing fasteners having similar functions and adapted to be used with similar methods. Tests have proven that such reduced section are particularly adapted to form a precise and reliable joint, with a one-sided method or access, and without an excessive increase of the joining force when joining high strength materials. For instance, joining forces under 3,5 kilo Newtons for joining two components at least one being made in high strength material are possible. More particularly, such fastening element can join components having a strength of 2000 MPa. Besides, the small shaft section allows to reduce the deformations of the component during and after the joining step. Finally, such small component allows a better structural strength, notably when adhesive is also used between the components.

In an embodiment, a ratio of head surface to shaft cross section surface is less than 2,5. In an embodiment, the head has a head diameter, the shaft has a circular cross-section with a shaft diameter and thefastening element is such that a ratio of head diameter to shaft diameter is less than 2,5.

The ratio head diameter to shaft diameter less than 2,5 allows a small head diameter but does not decrease the joining performances of the fastening element, notably when said joining element is used with a pre-heating with plasma of the joining area. With a low head to shank ratio, the manufacturing capability is also better because the degree of deformation is lower. A small head (and de facto a small ratio) also leads to smaller dimensions of the setting tools and thus a compact tool adapted to join complex structures. Especially in the area of car battery boxes, the accessibility is an issue.

In an embodiment, the fastening element has a volume which is less than 0.14 cubic centimetres (1.5e-7 cubic meter). Thus, a relatively small fastening element is provided, decreasing the necessary joining forces (and de facto the space requirement for the joining tool). More particularly the volume can be less than 0.10 cubic centimetres.

In an embodiment, the weight of the fastening element is less than 1.1 grams (0.0012 kilograms). Weight, notably in the automotive industry, is always an issue. Costs and CO2 emissions are reduced.

In an embodiment, the head diameter is less than 7.5 mm, more particularly of about 5.5 millimetres (0.0055 meters). The head needs to be big enough to be driven by a punch of a setting machine for instance, but small enough to allows a clean joint. The head needs to be big enough to generate sufficient head traction and to cover the coating of the component eventually damaged by a heat-treatment (for instance plasma) prior the joining.

In an embodiment, the head is a countersunk head. More particularly, the head is not provided with an underheard having an annular groove or a recess. There is no need for the present fastening element to be provided such annular groove for receiving a bead- or bulge-shaped material accumulation of the head-side component. Indeed, the ratio disclosed above avoids such bead- or bulge-shaped material accumulation.

In an embodiment, at least the shaft comprises a thermally activatable coating. In an embodiment, the entire fastening element may be provided with a thermally activatable coating. Thus, one can eventually prevent the flowing-up from the component material toward the head. Such coating also allows a soldering effect which counteracts the reduced strength due to heat-treating. For instance, such coating can be a tin zinc coating (Sn/Zn) with 70% tin and 30% zinc.

In an embodiment, at least a portion of the shaft comprises a plurality of annular grooves. This increases the friction. Besides, the grooves lead to an interlocking effect (form-fit). Moreover, there is less heat exchange (due to the smaller contact surface between fastening element and component), and less heat flows into the element from the sheet.

In an embodiment, the annular grooves are arranged parallel to each other. Eventually, each groove is formed by a short segment and a long segment, the short and long segments forming an angle in a cross-section between 65 and 75 degrees. In an embodiment, the short and the long segments are connected to each other by a curved portion. In an embodiment, the short segment and the longitudinal axis form an angle of about 85 degrees. In an embodiment, the distance between two grooves is between 0.3 and 0.6 mm. In an embodiment, the grooves have a wave shape in a cross section. The wave shape can be regular or not. Such geometries also increase the friction between the fastening element and the components and can provide a re-hooking effect during a head pull.

In an alternative embodiment, the shaft is sensibly flat and smooth. Thus, a higher contact area between the shaft and the component is provided.

The present invention is also directed to a method for joining at least two components without a pre-formed hole with a setting tool having a punch and a fastening element according to any of the preceding claims, wherein the method comprises the following steps:
- providing a first and a second component, the first and the second components being at least partly positioned one on top of the other, the first component being made in a high-strength material
- providing a setting tool with a punch and a fastening element according to any of the preceding claims, wherein the fastening element is driven by the punch toward the first component along a joining axis, the fastening element firstly passing through the first component in the region of a joining area without pre-formed hole and then reaching the second component in the region of a joining area without pre-formed hole wherein, prior to the joining the first component in the region of the joining area is heat-treated, in particular via plasma, in such a way that a heat-affected zone is formed on the joining area of the first component, and in that the first component is heated in such a way that a strength of the first component in the heat-affected zone is reduced.

More particularly, the plasma allows a punctual heating of a joining area just before setting the fastening element. A strength of the first component in the heat-affected zone is reduced and thus a fastening element having a reduced section can be used for the joining of high-strength materials. Besides, the fastening element remains sensibly dimensionally stable during and after the joining. So, the joint is reliable.

Other characteristics and advantages of the invention will readily appear from the following description of embodiments, provided as non-limitative examples, in reference to the accompanying drawings.
Fig. 1 shows a perspective view of the fastening element according to an embodiment of the invention;
Fig. 2 shows a side view of the fastening element of Fig. 1;
Fig. 3 shows a detailed view of a groove of the fastening element of Fig. 2;
Fig. 4 shows a side view of a fastening element according to a second embodiment;
Fig. 5 schematically shows two components to be joined, the fastening element of Fig. 1 and a setting tool with a punch adapted to set the fastening element within the two components.

On the different figures, the same reference signs designate identical or similar elements.

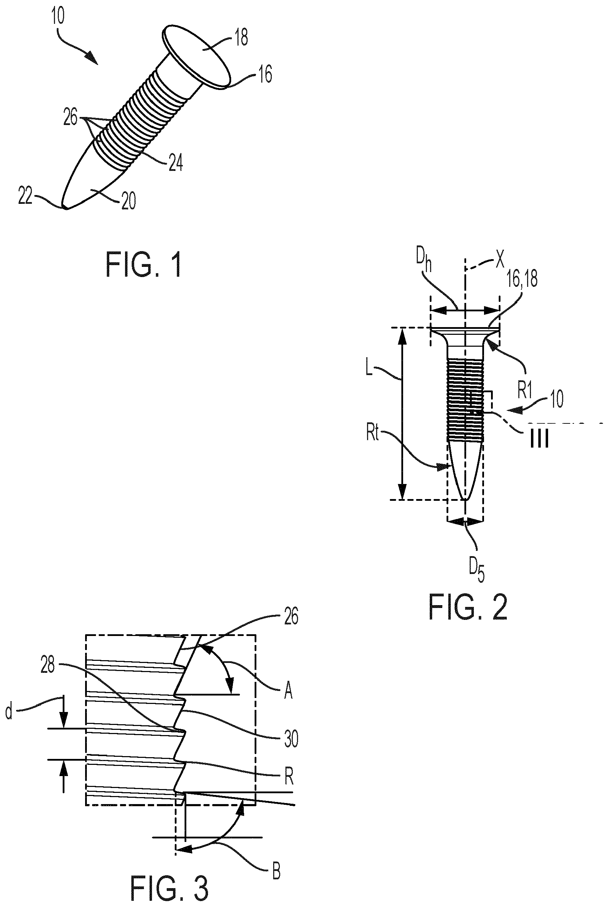

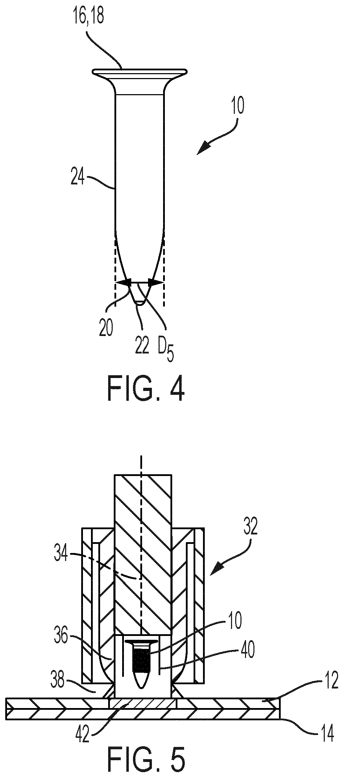

Fig. 1 and Fig. 2 shows a fastening element 10 for joining at least two components 12, 14 (see Fig. 5) without preformed hole(s). The fastening element 10 comprises a head 16 at a first axial end 18. The head has a head diameter Dh. The fastening element 10 comprises a tapered hole-forming portion 20 arranged at a second axial end 22 opposite to the first end 18. The tapered hole-forming portion 20 is for instance a tip. A shaft 24 is arranged between the tapered hole-forming portion 20 and the head 16. The shaft 24 defines a longitudinal axis X of the fastening element between the first and the second axial end 18, 22. The fastening element 10 has an axial length L between the first axial end and the second axial end. The shaft has a circular cross-section with a shaft diameter Ds. In another embodiment (not represented), the shaft may not have a circular cross-section. For examples oval or sensibly triangular cross-section may be provided. The cross section of the shaft is for instance less than 7,1 square millimetres.

The head diameter is for example of 5.5 millimetres. A ratio of head diameter Dh to shaft diameter Ds is less than 2.5. More particularly, a ratio of head diameter Dh to shaft diameter Ds is less than 2.3 and in particular less than 2. In an embodiment the shaft diameter is between 2.4 and 3.1 millimetres, and more particularly between 2.6 and 3.1. The axial length L of the fastening element 10 is for instance between 12 mm and 15 mm, eventually between 13 and 14 mm. In any case the length of the fastening element 10 is not less than 10 mm and not more than 18 millimetres.

As depicted in Fig. 4, the shaft 24 may be flat and smooth, without particular protrusions. In another embodiment, depicted in Fig. 1 to Fig. 3, the shaft may comprise grooves 26. For instance, the shaft comprises a plurality of grooves which are at a non-zero distance from the head and from the tapered hole-forming portion. In another embodiment, the grooves may be provided directly from the head and/or the tapered hole-forming portion. In such case the shaft diameter Ds correspond to the outer diameter, and not the inner diameter (in other words the shaft diameter is the external diameter or the "biggest" diameter). The grooves 26 are annular groves. The grooves 26 are arranged parallel to each other. Each groove is formed, as illustrated in Fig. 3, by a short segment 28 and a long segment 30, the short and long segments 28, 30 forming an angle A in a cross-section between 65 and 75 degrees. More particularly the angle is of about 70 degrees. The short and the long segments 28, 30 are connected to each other by a curved portion. Said curved portion has a radius R of about 0.03mm. The short segments 28 may form an angle B of about 85 degrees with the longitudinal axis X. The distance d between two grooves is between 0.3 and 0.6 mm.

The head 16 is for instance circular. The head 16 is a countersunk head. However, in another embodiment the heat could be a flat head. The head 16 comprises a flat upper side surface and an underside surface which merges in the shaft with a radius of curvature R1. In an embodiment (not depicted) a chamfer instead of the radius R1 could be provided. The head has a certain thickness between the upper side and the underside surfaces. The thickness is for instance between 0.15 and 0.35 millimetres, and more particularly between 0.2 and 0.3 millimetres.

The shaft 24 is sensibly cylindrical and at its second end 22, the tapered hole-forming portion 20 is ogival. In another embodiment, the tapered hole-forming portion 20 may be pyramidal or have any shape that allows a radial displacement of material. The tapered hole-forming portion 20 comprises a first curved portion with a first radius of curvature Rt. The first curved portion ends in cross section with a second curved portion having a second radius of curvature. Thus, the tip of the tapered hole-forming portion is sensibly rounded. In an embodiment, a flat area could be provided.

The fastening element 10 has an overall volume which is less than 0.14 cubic centimetres. More particularly, the fastening element has an overall volume which is less than 0.10 cubic centimetres. Even more particularly, the fastening element has an overall volume which is less than or equal 0.09 cubic centimetres The weight of the entire fastening element 10 is less than 1,1 grams. Preferably the weight is between 0,4 and 1,0 grams. For example the weight is of about 0.7 grams.

The fastening element 10 is made of steel or steel alloy, for example of C65, 37MnB4 or 40CrMoV4-6 .

In an embodiment, the shaft 24 comprises a thermally activatable coating. A galvanic tin zinc coating may be provided for instance. Thus, when inserted into the components, a soldering effect may appear when the joining area is heat-treated.

The fastening element 10 as described above is notably used for joining at least two components 12, 14 without a pre-formed hole with a setting tool 32 having a punch 34. The setting tool 32 comprises for instance a punch and an electrode 36 designed to create an electric arc 38 (notably a non-transferred electric arc). The setting tool 32 comprises also a fastening element holder 40 to hold and guide the fastening element 10. In order to realize a joint between the two components 12, 14, the setting tool 32 is arranged above a joining area 42 of the first component 12 (upper component). Then a non-transferred electric arc 38 is ignited between the upper component and the electrode. In particular a plasma arc 38 or plasma jet 38 burns between the electrode and the component. For instance a plasma torch may be provided and points locally to the joining area. The thermal energy fed to the upper component via the electric arc heats the joining area 42 of the first component 12 (and eventually the second component 14) in such a way that a strength of the first component 12 (and optionally a strength of the second component 14) is (are) reduced. Once the strength of the first component is reduced, the fastening element 10 is pressed via the punch 34 through the first component 12 toward the second component 14. The feed motion is stopped when the head contacts the upper component. The size of the joining area 42 and the locally reduced strength of the at least first component allows to reduce the joining force and to maintain a fastening element during and after the joining step which is dimensionally sensibly stable.

A thermal shrinkage around the fastening element 10 can compensate the locally reduced strength of the component. Such method and such fastening element 10 allows the joining of components made of a material with a tensile strength of for instance 2000 MPa.

## Claims

1. Fastening element (10) for joining at least two components without preformed hole(s) and particularly adapted when at least one of the components is made in a high-strength material, with a setting tool (32) having a punch (34), wherein the fastening element is driven in the components by the punch (34) comprising:
- a head (16) at a first axial end
- a tapered hole-forming portion (20) at a second axial end opposite to the first axial end, and
- a shaft (24) arranged between the tapered hole-forming portion (20) and the head (16) and defining a longitudinal axis (X) of the fastening element between the first and the second axial end (18, 22)
**Characterized in that**
the surface of the shaft cross-section is less than or equal 7.1 square millimetres (7,1e-5 square meters).

2. Fastening element (10) according to claim 1, wherein the head has a head diameter (Dh), the shaft (24) has a circular cross-section with a shaft diameter (Ds) and a ratio of head diameter (Dh) to shaft diameter (Ds) is less than 2,5.

3. Fastening element (10) according to claim 1 or claim 2, wherein the fastening element (10) has a volume which is less than 0.14 cubic centimetres (1.5e-7 cubic meter).

4. Fastening element (10) according to any of the preceding claims, wherein the weight of the fastening element (10) is less than 1.1 grams (0.0012 kilograms).

5. Fastening element (10) according to, wherein the head diameter (Dh) is of less than 7.5 millimetres (0.0075 meters).

6. Fastening element (10) according to any of the preceding claims, wherein the head (16) is a countersunk head.

7. Fastening element (10) according to any of the preceding claims, wherein at least the shaft (24) comprises a thermally activatable coating.

8. Fastening element (10) according to any of the preceding claims, wherein at least a portion of the shaft (24) comprises a plurality of annular grooves (26).

9. Fastening element (10) according to claim 8, wherein the annular grooves (26) are arranged parallel to each other, and wherein the distance between two grooves (26) is between 0.3 and 0.6 mm.

10. Fastening element according to any of claims 1 to 7, wherein the shaft (24) is sensibly flat and smooth.

11. Method for joining at least two components (12, 14) without a pre-formed hole with a setting tool (32) having a punch (34) and a fastening element (10) according to any of the preceding claims, wherein the method comprises the following steps:
- providing a first and a second component (12, 14), the first and the second components being at least partly positioned one on top of the other, the first component being made in a high-strength material
- providing a setting tool (32) with a punch (34) and a fastening element (10) according to any of the preceding claims, wherein the fastening element (10) is driven by the punch toward the first component along a joining axis, the fastening element (10) firstly passing through the first component in the region of a joining area without pre-formed hole and then reaching the second component in the region of a joining area without pre-formed hole
wherein, prior to the joining, the first component (12) in the region of the joining area is heat-treated, in such a way that a heat-affected zone is formed on the joining area of the first component, and in that the first component is heated in such a way that a strength of the first component (12) in the heat-affected zone is reduced.

12. Method according to claim 11, wherein the joining area is heat-treated via plasma.
